# Europäisches Patentamt

# European Patent Office

# Office européen des brevets

(19)

(11) Veröffentlichungsnummer: **0 235 648**
**B1**

(12) EUROPÄISCHE PATENTSCHRIFT

(45) Veröffentlichungstag der Patentschrift:
**27.12.90**

(51) Int. Cl.⁵: **H04L 12/40, H04L 25/02**

(21) Anmeldenummer: **87102077.2**

(22) Anmeldetag: **13.02.87**

(54) Schaltungsanordnung zur seriellen Datenübertragung zwischen mehreren Teilnehmerstellen.

(30) Priorität: **17.02.86 DE 3604982**

(43) Veröffentlichungstag der Anmeldung:
**09.09.87 Patentblatt 87/37**

(45) Bekanntmachung des Hinweises auf die Patenterteilung:
**27.12.90 Patentblatt 90/52**

(84) Benannte Vertragsstaaten:
**AT BE CH DE ES FR GB GR IT LI NL SE**

(56) Entgegenhaltungen:
**EP-A- 0 049 917**
**FR-A- 2 363 240**

**ELECTRONICS, Band 47, Heft 11, Mai 1974,
Seiten 119-120; T. BRUINS: "Data transmission is faster
with ternary coding"
ELECTRONIC ENGINEERING, Band 53, Heft 658,
Oktober 1981, Seiten 81-85, London, GB; R. BURGESS:
"RS 422 and beyond"
ELECTRICAL DESIGN NEWS, Band 17, Heft 6,
März 1972, Seiten 44-46; D. PIPPENGER: "Line drivers
are not limited to computer systems"**

(73) Patentinhaber: **Siemens Aktiengesellschaft,
Wittelsbacherplatz 2, D-8000 München 2(DE)**

(72) Erfinder: **Lang, Otto, Ing. (grad)., Reschreiterstrasse 17,
D-8000 München 45(DE)**
Erfinder: **Dombrowski, Manfred, Ing. grad.,
Geroltstrasse 36, D-8000 München 2(DE)**

## Beschreibung

Die Erfindung bezieht sich auf eine wie im Oberbegriff des Patentanspruches 1 angegebene Schaltungsanordnung zur seriellen Datenübertragung zwischen mehreren Teilnehmerstellen.

Eine derartige Schaltungsanordnung ist bereits durch die Zeitschrift Elektronik 6/23.3.1984, Seite 24 und 12/15.6.1984, Seiten 97 und 98 bekannt.

Die bekannte Schaltungsanordnung enthält Schnittstellenbausteine zur seriellen Datenübertragung, die jeweils aus einem Datensender und einem Datenempfänger bestehen und für Vollduplex- oder Halbduplex-Betrieb geeignet sind. Bei Halbduplex-Betrieb ist in jeder Teilnehmerstelle der Ausgang des Datensenders unmittelbar mit dem Eingang des Datenempfängers verbunden. Die Teilnehmerstellen, die z.B. ein Rechner und daran angeschlossene Peripheriegeräte sein können, sind an einen Datenbus angeschlossen. In jeder Teilnehmerstelle lassen sich der Datensender und der Datenempfänger durch Steuersignale in einen aktiven oder in einen passiven Zustand steuern.

Da die Sender im aktiven Zustand an ihrem Ausgang eine niederohmige Spannungsquelle darstellen, deren Spannung vom Logikpegel des an den Eingang angelegten Datensignals abhängt, kann zu jedem Zeitpunkt immer nur ein Datensender aktiv sein.

Man kann zu diesem Zweck das Steuersignal, das den Datensender einer Teilnehmerstelle aktiv steuert, zu allen anderen Teilnehmern übertragen und dort dazu verwenden, eine Aktivsteuerung für die Zeit der Belegung des Datenbusses unmöglich zu machen. Dabei liegt es nahe, die Steuersignale über Steuerleitungen oder über einen Steuerbus zu übertragen, der zusätzlich zum Datenbus vorgesehen ist.

Aufgabe der Erfindung ist es, eine wie im Oberbegriff des Patentanspruches 1 angegebene Schaltungsanordnung so auszubilden, daß eine gegenseitige Steuerung der Teilnehmerstellen ohne Zuhilfenahme zusätzlicher Steuerleitungen über den Datenbus selbst erfolgt und dies in einer solchen Weise, daß die Teilnehmerstellen von sich aus auf den Bus zugreifen können, wenn dieser nicht durch eine andere Teilnehmerstelle belegt ist.

Schaltungsanordnungen dieser Art sind auch Gegenstand der gleichzeitig eingereichten EP-A 0 234 453 und EP-A 0 235 649.

Bei einer wie im Oberbegriff des Patentanspruches 1 angegebenen Schaltungsanordnung sind bei nicht belegtem Datenbus alle Datensender an ihrem Ausgang hochohmig. Ausgehend von der Erkenntnis im Rahmen der Erfindung, daß dieser hochohmige Tristate-Zustand für Steuerungszwecke ausnutzbar ist, wird die Schaltungsanordnung zur Lösung der genannten Aufgabe in der im kennzeichnenden Teil des Patentanspruches 1 angegebenen Weise ausgebildet. Dabei können die Datensender unmittelbar oder mittelbar, insbesondere mittels Übertragungseinrichtungen, die mit Modems versehen sind, mit den Teilnehmerstellen verbunden sein.

Die Widerstände der Widerstandsanordnung sind so zu bemessen, daß bei wenigstens einem aktiven Datensender dieser und bei ausschließlich passiven Datensendern die Spannungsquelle die Potentiale der Datenleitungen bestimmt. Ist die Datenleitung im Hinblick auf eine hohe Bitrate der zu übertragenden Datensignale mit Abschlußwiderständen in der Größe des Wellenwiderstandes der Datenleitung versehen, so sind die Widerstände der Widerstandsanordnung im Vergleich zu den Abschlußwiderständen ausreichend niederohmig, in diesem Rahmen jedoch so hochohmig wie möglich zu bemessen. Sind keine Abschlußwiderstände vorhanden, sind die Widerstände der Widerstandsanordnung ausreichend niederohmig im Vergleich zu der Parallelschaltung der Leckwiderstände der an den Datenbus angeschlossenen Bausteine zu bemessen.

Durch die genannten Maßnahmen ergibt sich der Vorteil, daß die Teilnehmerstellen mit einfach realisierbaren Mitteln Aufschluß über den Belegungszustand des Datenbusses gewinnen können, ohne daß hierzu ein eigener Steuerbus erforderlich ist. Besonders vorteilhaft läßt sich das Belegtsignal zur Steuerung eines oder mehrerer Modems verwenden, in der Weise, daß der Sender des Modems bzw. die Sender der Modems in Abhängigkeit vom Belegungszustand des Datenbusses in den aktiven oder passiven Zustand gesteuert werden. Belegt ein Modem den Datenbus, so werden die Datensender aller anderen Modems selbsttätig aktiv gesteuert, ohne daß hierzu Umschalteeinrichtungen mit aufwendigen Steuereinrichtungen erforderlich sind.

Als Erkennungsschaltung kann insbesondere ein Relais dienen, dessen Wicklung an die beiden Adern des Datenbusses angeschlossen ist und das dann anspricht, wenn ein Datensender aktiv ist.

Eine wie im Patentanspruch 1 angegebene Schaltungsanordnung zur seriellen Datenübertragung hat die Eigenschaft, daß bei nicht belegter Datenleitung beide Adern wenigstens näherungsweise gleiches Potential, d.h., die gleiche Spannung gegenüber Bezugspotential haben. In weiterer Ausgestaltung der Erfindung läßt sich diese Eigenschaft dadurch vorteilhaft ausnutzen, daß die Schaltungsanordnung in der im kennzeichnenden Teil des Patentanspruches 2 angegebenen Weise ausgebildet wird.

Ein wesentlicher Vorteil dieser Maßnahmen besteht darin, daß die Erkennungsschaltung aus elektronischen Schaltkreisen üblicher Art zusammengesetzt werden kann. Insbesondere können Schmitt-Trigger mit nachgeschaltetem NAND-Glied Verwendung finden.

Sind die Datensender so beschaffen, daß sie jeweils an dem einen Ausgangsanschluß ein positives und am anderen Ausgangsanschluß ein negatives Potential gegenüber Bezugspotential bzw. Masse haben, so kann man die Widerstandsanordnung z.B. an das Bezugspotential als Hilfsspannung legen. Wählt man als Hilfsspannung eine der beiden Spannungen, die die Ausgangsanschlüsse der Datensender annehmen können, so ergibt sich ein größerer Abstand der beiden auszuwertenden Spannungen, so daß sich diese leichter voneinander unterscheiden lassen.

Es gibt andererseits Datensender, die im aktivierten Zustand an einem der beiden Ausgangsanschlüsse eine erste vorgegebene Spannung und am anderen der beiden Ausgangsanschlüsse eine zweite, gegenüber der ersten größere vorgegebene Spannung gleicher Polarität gegen Bezugspotential haben, so daß sich ebenfalls unterschiedlich gepolte Ausgangsspannungen ergeben. Dieser Art sind insbesondere Datensender von Schnittstellen-Bausteinen, die für die Schnittstellen RS485, RS 422 oder dergleichen konzipiert sind. Die Schnittstelle RS485 ist für Halbduplex-Betrieb über einen Zweidraht-Datenbus, die Schnittstelle RS422 für Voll- oder Halbduplex-Betrieb über einen Vierdraht-Datenbus bekannt.

Verwendet man in einer wie im Patentanspruch 2 angegebenen Schaltungsanordnung solche Datensender und als Hilfsspannung eine Spannung, die mindestens so groß wie die größere der beiden Spannungen ist, so ergibt sich, daß bei belegtem Datenbus immer eine der beiden Adern des Datenbusses an der kleineren der beiden vorgegebenen Spannungen liegt und bei nicht belegtem Datenbus beide Adern mit der größeren der beiden Spannungen beaufschlagt sind. Hierdurch ergibt sich in vorteilhafter Weise die Möglichkeit, als Erkennungsschaltung ein einziges Verknüpfungsglied vorzusehen, das mit seinen Eingängen - gegebenenfalls unter Zwischenschaltung von Pegelwandlern - an die Adern des Datenbusses angeschlossen ist. Insbesondere ist die Verknüpfung derart, daß das Belegtsignal bei einem Ausgangssignal zweiter Art gebildet wird.

Zweckmäßigerweise wird die Schaltungsanordnung dabei in der im kennzeichnenden Teil des Patentanspruches 3 angegebenen Weise ausgebildet.

Für den Fall, daß die Datensender Schaltkreisen für Schnittstellen vom Typ RS485, RS422 oder dergleichen angehören, lassen sich in vorteilhafter Weise logische Verknüpfungsglieder in CMOS-Technik verwenden, insbesondere ohne daß Pegelwandler, Schmitt-Trigger oder dergleichen vorgeschaltet sind. Andererseits bietet eine Erkennungsschaltung mit einem aus zwei Dioden bestehenden ODER-Glied mit einem über eine Transistorstufe daran angeschlossenen Inverter die Möglichkeit, durch entsprechende Wahl der für die Transistorstufe vorgesehenen Versorgungsspannung die Ansprechschwelle der Erkennungsschaltung an die speziellen Verhältnisse des jeweiligen Anwendungsfalles anzupassen. Insbesondere lassen sich auf diese Weise Ansprechschwellen realisieren, die nur wenig von Masse bzw. Bezugspotential verschieden sind.

Die Maßnahmen nach Anspruch 4 haben den Vorteil, daß ein Ausfall der Hilfsspannung, bei dem die Spannung z.B. auf den Wert Null abfällt, die Funktion der Schaltungsanordnung zur seriellen Datenübertragung nicht beeinträchtigt. Insbesondere kann dabei kein Belegtzustand vorgetäuscht werden.

Eine Teilnehmerstelle darf nicht auf den Datenbus zugreifen, wenn dieser bereits durch einen anderen Teilnehmer belegt ist. Hat eine Teilnehmerstelle den Datenbus belegt, so stellt dies die Erkennungsschaltung fest. In diesem Fall steht der Datenbus jedoch dieser Teilnehmerstelle nach wie vor zur Verfügung.

Enthält die Teilnehmerstelle selbst keine Vorrichtung, die im betrachteten Betriebszustand eine Selbstabschaltung der Teilnehmerstelle verhindert, so ist es zweckmäßig, ein Belegtkriterium nur dann an die Teilnehmerstelle weiter zu geben, wenn der Datenbus durch eine andere Teilnehmerstelle belegt ist.

Da in den Teilnehmerstellen die Datensender mit Hilfe von Steuersignalen aktiviert werden, stehen mit diesen Steuersignalen Kriterien darüber zur Verfügung, ob eine festgestellte Belegung des Busses gegebenenfalls von der betreffenden Teilnehmerstelle selbst herrührt. So läßt sich durch eine gemeinsame Auswertung oder Verknüpfung des Steuersignals und des Belegtkriteriums feststellen, ob der Datenbus durch die betreffende oder durch eine andere Teilnehmerstelle belegt ist. Zweckmäßigerweise wird die Schaltungsanordnung dabei in der im Anspruch 5 angegebenen Weise ausgebildet.

Die UND-Schaltung - je nach Art der Steuerschaltung mit oder ohne nachgeschalteter Negierung - sperrt das Kriterium "Datenbus belegt", wenn die betreffende Teilnehmerstelle selbst den Datenbus belegt hat.

Eine Anordnung, die in vorteilhafter Weise Störungen bzw. durch Umschaltvorgänge entstehende Nadelimpulse eliminiert, ergibt sich in weiterer Ausgestaltung der Erfindung aus den Maßnahmen nach Anspruch 6. Dabei dient der Schmitt-Trigger zugleich als UND-Glied.

Die Maßnahmen nach Anspruch 7 haben den Vorteil, daß der Schmitt-Trigger zugleich Störungen eliminiert und die gewünschte UND-Verknüpfung bzw. NAND-Verknüpfung realisiert.

Weitere vorteilhafte Ausgestaltungen der Erfindung ergeben sich aus den Ansprüchen 8 bis 10.

Die Erfindung wird anhand der in den Figuren dargestellten Ausführungsbeispiele näher erläutert.

Es zeigen

Fig. 1 eine Schaltungsanordnung zur seriellen Datenübertragung zwischen mehreren über einen Datenbus miteinander verbundenen Digital- und Übertragungsbaugruppen mit einer an den Datenbus angeschlossenen Widerstandsanordnung und mit NAND-Gliedern enthaltenden Erkennungsschaltungen,

Fig. 2 eine Schaltungsanordnung zur seriellen Datenübertragung, bei der jede Baugruppe eine eigene Widerstandsanordnung enthält, im Ausschnitt,

Fig. 3 eine Erkennungsschaltung mit Exklusiv-ODER-Gliedern,

Fig. 4 eine Schaltungsanordnung zur seriellen Datenübertragung, bei der jede Baugruppe eine an die negative Hilfsspannung geführte Widerstandsanordnung enthält und

Fig. 5 eine Erkennungsschaltung mit zwei Dioden und einem Transistor.

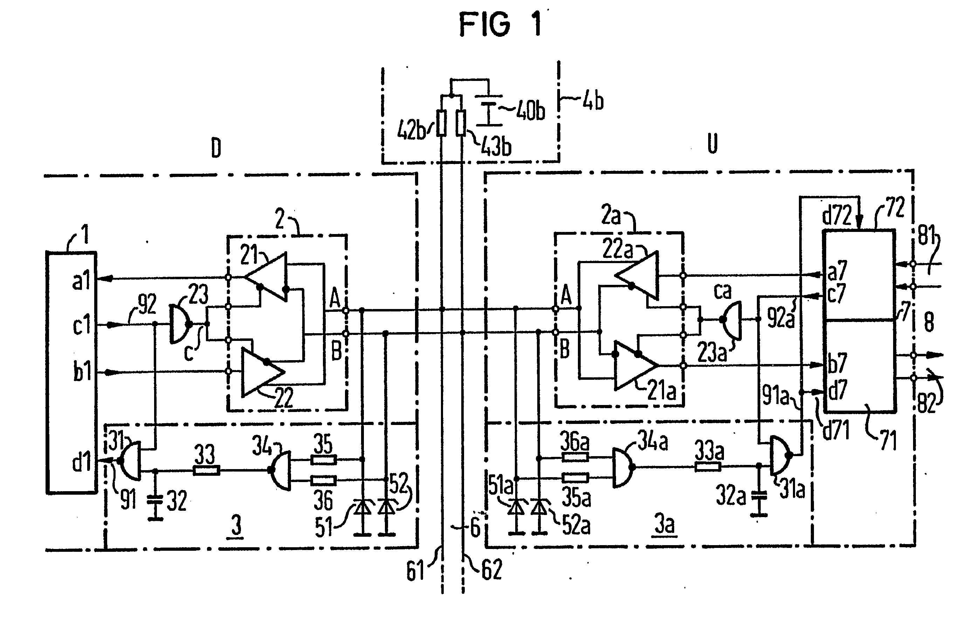

Fig. 1 zeigt eine Schaltungsanordnung zur seriellen Datenübertragung. Der zweiadrige Bus 6 verbindet mehrere Baugruppen eines Fernwirkgerätes oder einer Fernwirkeinrichtung, von denen in der Figur die Digitalbaugruppe D und die Übertragungsbaugruppe U dargestellt sind. Die beiden Adern 61 und 62 des Datenbusses 6 werden außer zur Datenübertragung auch zur Übermittlung von Steuersignalen ausgenutzt, die zur gegenseitigen Steuerung der Baugruppen dienen.

Die Digitalbaugruppe D ist eine Einrichtung zur Ablaufsteuerung und enthält als Teilnehmerstelle 1 einen durch einen Mikroprozessor gesteuerten USART 1, den Schnittstellenbaustein 2 und den Signalempfänger 3.

Die Übertragungsbaugruppe U enthält das an die vierdrähtige NF-Übertragungsleitung 8 angeschlossene Modem 7 mit Sender 71 und Empfänger 72, den Schnittstellenbaustein 2a und den Signalempfänger 3a. Das Modem 7 besteht z.B. aus einem FM-Sender und einem FM-Empfänger. Die NF-Übertragungsleitung 8 führt zu wenigstens einer weiteren Teilnehmerstelle und ist im beschriebenen Beispiel Bestandteil eines Fernwirknetzes mit mehreren Stationen bzw. weiteren Teilnehmerstellen. Die Übertragungsleitung ist eine Vierdrahtleitung, bestehend aus der ankommenden Leitung 81 und der abgehenden Leitung 82. Gegebenenfalls kann anstelle der Vierdrahtleitung eine Zweidrahtleitung Verwendung finden. In diesem Fall sind der Sender 71 und der Empfänger 72 an die Zweidrahtleitung anzuschließen.

An die beiden Adern 61 und 62 des Busses 6 können weitere Digital- und/oder Übertragungsbaugruppen angeschlossen werden. Weitere Digitalbaugruppen können insbesondere Vorrichtungen zur Meldungsein- oder ausgabe sein. Weitere Übertragungsbaugruppen können dazu dienen, die von einer Digitalbaugruppe oder von einer Übertragungsbaugruppe an den Bus 6 abgegebenen seriellen Daten an weitere Übertragungsleitungen und daran angeschlossenen Stationen weiterzugeben.

Als Schnittstelle zwischen den Baugruppen und dem Datenbus 6 dient eine für eine derartige Multipoint-Buskonfiguration geeignete Schnittstelle, bei der die Datensender 22 bzw. 22a im nichtaktiven Zustand an ihrem Ausgang hochohmig sind. Eine solche Schnittstelle ist insbesondere die Schnittstelle RS485.

Der Datenbus 6 kann - abweichend von Fig. 1 - in bekannter Weise an seinen beiden Enden jeweils durch einen Widerstand zwischen den beiden Adern 61, 62 mit seinem Wellenwiderstand abgeschlossen sein.

Alle Teilnehmerstellen liegen über eine in den Figuren nicht dargestellte Masseverbindung auf gemeinsamem Massepotential.

Zum Anschluß an den Datenbus 6 sind die Baugruppen, von denen in der Figur eine Digitalbaugruppe D und eine Übertragungsbaugruppe U dargestellt sind, jeweils mit einem Schnittstellenbaustein 2 bzw. 2a versehen, der z.B, vom Typ SN75176a sein kann.

Bei dem Schnittstellenbaustein 2 der Digitalbaugruppe D sind die Ausgangsanschlüsse A und B des Datensenders 22 unmittelbar mit dem Eingang des Datenempfängers 21 verbunden. Der Anschluß A ist an die Ader 61, der Anschluß B an die Ader 62 des Datenbusses 6 geführt.

Der Datensender 22 und der Datenempfänger 21 sind jeweils mit ihren Steueranschlüssen an die gemeinsame Steuerleitung C geführt und lassen sich durch Steuersignale wechselweise aktiv und passiv steuern, so daß zu ein und demselben Zeitpunkt jeweils nur der Datensender 22 oder der Datenempfänger 21 aktiv sein kann.

Der Schnittstellenbaustein 2a der Übertragungsbaugruppe U ist wie der Schnittstellenbaustein 2 der Digitalbaugruppe D aufgebaut. Der Ausgang des Datensenders 22a ist unmittelbar mit dem Eingang des Datenempfängers 21a verbunden. Der Datensender 22a und der Datenempfänger 21a sind jeweils mit ihren Steueranschlüssen an die gemeinsame Steuerleitung Ca geführt.

Der Schnittstellenbaustein 2 der Digitalbaugruppe D ist an den USART 1 angeschlossen. Der Schnittstellenbaustein 2a der Übertragungsbaugruppe U ist mit dem Modem 7 verbunden.

Die Schnittstellenbausteine 2 und 2a stellen Pegelwandler dar, die auf der dem Datenbus 6 abgewandten Seite mit TTL-Pegel betrieben werden. Im Schnittstellenbaustein 2 ist je nach logischem Zustand des an der Steuerleitung C angelegten TTL-Logikpegel der Datenempfänger 21 aktiviert und der Datensender 22 passiv oder umgekehrt. In entsprechender Weise ist bei dem Schnittstellenbaustein 2a abhängig vom Logikpegel des an der Steuerleitung Ca angelegten Steuersignals der Datenempfänger 21a aktiviert und der Datensender 22a passiv oder umgekehrt.

Es kann andererseits zweckmäßig sein, in der Digitalbaugruppe D nur den Datensender 22 über die Steuerleitung C zu steuern und den Datenempfänger 21 immer eingeschaltet zu lassen. Damit kann das von der Digitalbaugruppe D auf den Bus 6 gesendete Datensignal gleichzeitig zur Kontrolle ausgewertet werden.

In der Digitalbaugruppe D ist der Ausgang des Datenempfängers 21 an den Dateneingang a1 des USART 1 geführt. An den Datenausgang b1 des USART 1 ist der Eingang des Datensenders 22 angeschlossen. Der Steuereingang des Datenempfängers 21 und der Steuereingang des Datensenders 22 sind unmittelbar miteinander und mit der Steuerleitung c verbunden. Der Steuereingang c1 des USART 1 ist über den Inverter 23 an die Steuerleitung des Schnittstellenbausteins 2 geführt.

An den Datenbus 6 ist die Widerstandsanordnung 4b angeschlossen. Zwischen den beiden Adern 61 und 62 des Datenbusses 6 liegt eine Serienschaltung aus den Widerständen 42b und 43b der Widerstandsanordnung 4b. Der Verbindungspunkt der Widerstände 42b und 43b ist mit dem Pluspol der Hilfsspannungsquelle 40b verbunden, die die Hilfsspannung $U_H$ abgibt. Der Minuspol der Hilfsspannungsquelle 40b liegt an Masse.

Die Erkennungsschaltung 3 der Digitalbaugruppe D enthält das NAND-Glied 34, dessen Eingänge über je einen Widerstand 35 bzw. 36 an die Adern 61 und 62 des Datenbusses 6 angeschlossen sind. Der Ausgang des NAND-Gliedes 34 ist über ein RC-Glied, bestehend aus dem Widerstand 33 und dem Kondensator 32 an den Signaleingang des Schmitt-Triggers 31 geführt. Ein Steuereingang des Schmitt-Triggers 31 ist an den Steuerausgang c1 des USART 1 angeschlossen.

Die beiden Eingänge des Schmitt-Triggers 31 sind nach Art eines UND-Gliedes miteinander verknüpft. Der invertierende Ausgang des Schmitt-Triggers 31 ist über die Steuerleitung 91 an den Steuereingang d1 des USART 1 geführt.

Die Digitalbaugruppe D enthält ferner eine Anordnung zum Schutz gegen Überspannungen auf dem Datenbus 6. Diese Anordnung besteht aus der zwischen der Ader 61 und Masse angeordneten Z-Diode 51 und der zwischen der Ader 62 und Masse liegenden Z-Diode 52.

Der Steuersignalempfänger 3a der Übertragungsbaugruppe U enthält das NAND-Glied 34a, dessen Eingänge über je einen Widerstand 35a bzw. 36a an die Adern 61 und 62 des Datenbusses 6 angeschlossen sind. Der Ausgang des NAND-Gliedes 34 a ist über ein RC-Glied, bestehend aus dem Widerstand 33a und dem Kondensator 32a an den Signaleingang des Schmitt-Triggers 31a geführt. Ein Steuereingang des Schmitt-Triggers 31 a ist an den Steuerausgang c7 des Modems 7 angeschlossen.

Die beiden Eingänge des Schmitt-Triggers 31a sind nach Art eines UND-Gliedes miteinander verknüpft. Der invertierende Ausgang des Schmitt-Triggers 31a ist über die Steuerleitung 91a an die Steuereingänge d71 und d72 des Modems 7 geführt.

Die Übertragungsbaugruppe U enthält ferner eine Anordnung zum Schutz gegen Überspannungen auf dem Datenbus 6, bestehend aus der zwischen der Ader 61 und Masse angeordneten Z-Diode 51a und der zwischen der Ader 62 und Masse liegende Z-Diode 52a.

Als Schmitt-Trigger 31 und 31a dienen zweckmäßigerweise NAND-Glieder, deren Eingänge eine Schmitt-Trigger-Charakteristik aufweisen. In Abwandlung der gezeigten Schaltungsanordnung kann anstelle eines derartigen NAND-Gliedes ein an das RC-Glied angeschlossener Schmitt-Trigger mit nachgeschaltetem NAND-Glied Verwendung finden, das an seinen Eingängen keine Schmitt-Trigger-Charakteristik aufweist.

Beim Senden der in Fig. 1 gezeigten Fernwirkstation liegen die Sendedaten am Ausgang b1 des USART 1 an, werden in dem als Treiber dienenden Datensender 22 des Schnittstellenbausteins 2 auf den Schnittstellenpegel umgesetzt, über die Leitungen 61 und 62 des Datenbusses 6 zum Datenempfänger 21a des Schnittstellenbausteins 2a der Übertragungsbaugruppe U geleitet, von diesem auf TTL-Pegel umgesetzt und an den Eingang b7 des im Modem 7 enthaltenen Senders 71 abgegeben.

Im Empfangszustand der Fernwirkstation liegen die Empfangsdaten am Ausgang a7 des im Modem 7 enthaltenen Empfängers 72 an, werden im Datensender 22a des Schnittstellenbausteins auf Schnittstellenpegel umgesetzt, über die Adern 61, 62 des Datenbusses 6 zum Datenempfänger 21 des Schnittstellenbausteins 2 geleitet, von diesem auf TTL-Pegel umgesetzt und an den Dateneingang a1 des USART 1 abgegeben.

Der Tristate-Zustand des RS485-Datenbusses 6, entsprechend einem Logikpegel 0 auf einer Steuerleitung C bzw. Ca, signalisiert den angeschlossenen Baugruppen, daß sie auf den Datenbus zugreifen können. Greift eine Baugruppe auf den Datenbus 6 zu, so nimmt der Datenbus einen Nicht-Tristate-Zustand an. Die Auswertung dieses Zustandes führt in den weiteren Baugruppen zur Bildung eines Steuersignals, welches die Steuerleitung 91 bzw. 91a auf Logikpegel 0 schaltet und damit den Zugriff aller übrigen Baugruppen auf den Bus sperrt. Außerdem steuert dieses Steuersignal die Übertragungsbaugruppe(n) so, daß deren Sender 71 zur Übertragungsleitung 8 hin aktiv werden und daß deren Empfänger 72 gesperrt werden.

Der USART kann z.B. vom Typ SAB 8251A sein.

Die Steuerung der Schnittstellenbausteine über den Bus 6 umfaßt die folgenden Betriebszustände:

a) Ist der Datenbus 6 nicht belegt, d.h. befinden sich alle Datensender 22, 22a im hochohmigen Tristate-Zustand, so liegen die beiden Adern 61 und 62 des Datenbusses 6 über die Widerstände 42b, 43b auf Pluspotential von insbesondere etwa $U_H =12$ V. Dabei ergeben sich jeweils an den beiden Eingängen der CMOS-NAND-Glieder 34 bzw. 34a Spannungen, denen der Logikpegel 1 entspricht. Die Ausgänge der NAND-Glieder 34 und 34a haben daher Logikpegel 0. Damit ist der Ausgang des Schmitt-Triggers 31 bzw. 31a - unabhängig von dem Logikpegel des an seinen Steuereingang geführten Steuersignals - auf Logikpegel 1 geschaltet.

In der Digitalbaugruppe D und gegebenenfalls in weiteren Digitalbaugruppen signalisiert die logische 1 auf der Steuerleitung 91 dem USART 1, daß der Datenbus 6 nicht belegt ist. In diesem Fall ist auch die NF-Übertragungsleitung 8 des Fernwirknetzes nicht belegt. In der Übertragungsbaugruppe U und gegebenenfalls in weiteren Übertragungsbaugruppen steuert die logische 1 auf der Steuerleitung 91a den Empfänger 72 auf Empfang und sperrt den Sender 71.

b) Ist der Datenbus 6 durch die Digitalbaugruppe D belegt, so schaltet in der belegenden Digitalbaugruppe der Steuerausgang c1 des USART 1 die daran angeschlossene Steuerleitung 92 auf die logische 0. Der Inverter aktiviert den Datensender 22. Der Ausgang des Datensenders 22 ist daher niederohmig. Je nach logischem Zustand am Datenausgang b1 des USART 1 wird über den Datenbus 6 eine logische 1 oder eine logische 0 übertragen.

Die beiden vorgegebenen Spannungen, die die Ausgangsanschlüsse (A, B) der Datensender (22, 22a) gegen Bezugspotential annehmen können, haben die gleiche Polarität.

Im Falle der Schnittstelle RS485 liegt bei Logikpegel 1 am Ausgangsanschluß A des Schnittstellenbausteins 2 z.B. die Spannung 3,7 V und am Ausgangsanschluß B z.B. die Spannung 1,1 V gegen Masse. Bei Logikpegel 0 liegt am Ausgangsanschluß A z.B. die Spannung 1,1 V und am Ausgangsanschluß B z.B. die Spannung 3,7 V. Somit liegt bei aktiviertem Schnittstellenbaustein und dadurch belegtem Bus 6 grundsätzlich eine der beiden Adern 61 oder 62 auf dem niedrigen Potential z.B. 1,1 V. Diesem Potential entspricht am Eingang des CMOS-NAND-Verknüpfungsgliedes 34 die logische 0. Dieser Zustand schaltet in allen Baugruppen die Ausgänge der NAND-Glieder 34 bzw. 34a auf Logikpegel 1.

In der aktiven Digitalbaugruppe D wird dieses Signal nicht weitergegeben, da der Schmitt-Trigger 31 durch eine logische 0 vom Steuerausgang c1 des USART 1 gesperrt ist.

Im betrachteten Betriebszustand sind gegebenenfalls vorgesehene weitere, in der Figur nicht dargestellte Digitalbaugruppen dagegen nicht aktiv, so daß die Schmitt-Trigger durch eine logische 1 geöffnet werden. Somit steuert dort die logische 1 am Ausgang des NAND-Gliedes über den nachgeschalteten Schmitt-Trigger die Steuerleitung auf die logische 0, meldet dem USART, daß der Datenbus 6 von einer anderen Baugruppe belegt ist und sperrt damit den Zugriff auf den Datenbus 6.

In der Übertragungsbaugruppe U und gegebenenfalls in weiteren Übertragungsbaugruppen steuert die logische 1 am Ausgang des NAND-Gliedes 34a über den nachgeschalteten Schmitt-Trigger 31a die Steuerleitung 91a auf Logikpegel 0, sperrt damit den Empfänger 72 und schaltet den Sender 71 ein.

c) Ist der Datenbus 6 durch die Übertragungsbaugruppe U belegt, so empfängt der Empfänger 72 über die NF-Leitung 8 ein Telegramm aus dem Fernwirknetz. Die Steuerleitung 92a schaltet auf die logische 0, sperrt damit den Schmitt-Trigger 31a und aktiviert über den Inverter 23a den Datensender 22a, so daß dieser auf den Datenbus 6 arbeitet. Entsprechendes gilt für eine weitere Übertragungsbaugruppe, falls diese anstelle der Übertragungsbaugruppe U den Datenbus 6 belegt.

In der am Datenbus 6 angeschlossenen Digitalbaugruppe D erkennt das NAND-Glied 34 den Belegungszustand und sperrt durch eine logische 0, die über die Steuerleitung 91 zum Steuersignaleingang d1 des USART 1 gelangt, für den USART 1 den Zugriff auf den Bus 6. Dasselbe gilt gegebenenfalls für weitere am Bus 6 angeschlossene Digitalbaugruppen.

Sind weitere Übertragungsbaugruppen U am Bus 6 angeschlossen, so erkennt deren NAND-Glied 34a den Belegungszustand und schaltet über den nachgeschalteten Schmitt-Trigger 31a den Empfänger 72 aus und den Datensender 71 ein.

Mit Hilfe der Schaltungsanordnung lassen sich auf besonders einfache Weise Verzweigungsfunktionen in Übertragungsnetzen realisieren, ohne daß zwischen den Übertragungsbaugruppen zusätzliche logische Verknüpfungen oder Steuersignalleitungen erforderlich sind.

In Abwandlung der gezeigten Schaltungsanordnung kann es ferner zweckmäßig sein, den Empfänger nicht je nach Belegtzustand des Datenbusses aktiv oder passiv zu steuern sondern ständig empfangsbereit zu halten, indem sein Steuereingang fest an Massepotential gelegt wird.

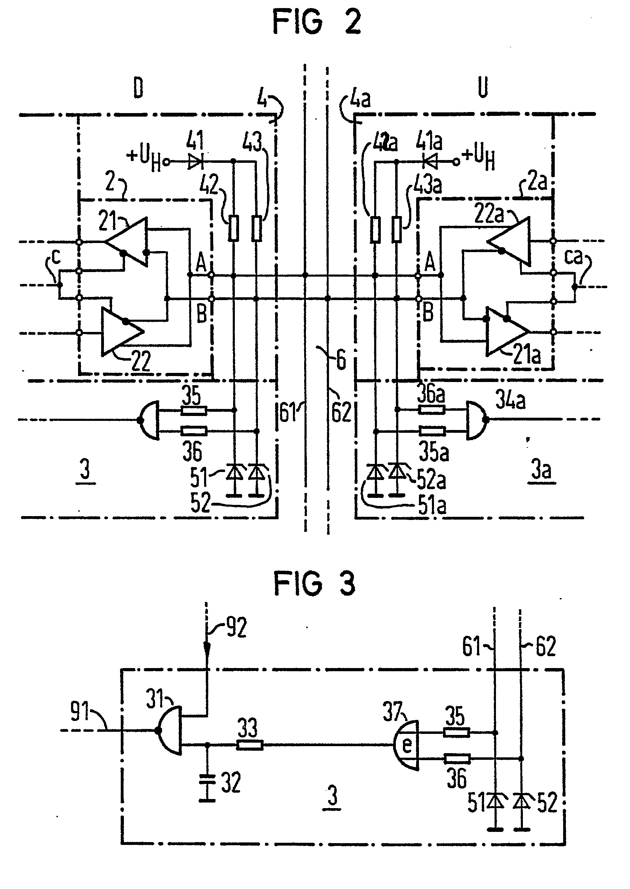

Die in Fig. 2 gezeigte Schaltungsanordnung zur seriellen Datenübertragung stimmt mit der nach Fig. 1 weitgehend überein. Abweichend sind anstelle einer einzigen Widerstandsanordnung 4b mehrere dezentrale Widerstandsanordnungen 4 und 4a vorgesehen. Jeder der an den Datenbus 6 angeschlossenen Baugruppen ist eine eigene Widerstandsanordnung zugeordnet, die vorzugsweise in der betreffenden Baugruppe untergebracht wird. Die Widerstandsanordnungen 4 und 4a sind jeweils wie die Widerstandsanordnung 4b nach Fig. 1 aufgebaut.

In der Digitalbaugruppe D liegt zwischen den beiden Adern 61 und 62 des Datenbusses 6 eine Serienschaltung aus den Widerständen 42 und 43 der Widerstandsanordnung 4. Der Verbindungspunkt der Widerstände 42 und 43 ist mit der Kathode der Diode 41 verbunden, deren Anode mit dem Pluspol der Hilfsspannungsquelle 40 verbunden ist, die die Hilfsspannung $U_H$ abgibt. Der Minuspol der Hilfsspannungsquelle 40 liegt an Masse.

In der Übertragungsbaugruppe U liegt zwischen den beiden Adern 61 und 62 des Datenbusses 6 eine Serienschaltung aus den Widerständen 42a und 43a der Widerstandsanordnung 4a. Der Verbindungspunkt der Widerstände 42a und 43a ist mit der Kathode der Diode 41a verbunden, deren Anode mit dem Pluspol der Hilfsspannungsquelle 40a verbunden ist, die die Hilfsspannung $U_H$ abgibt. Der Minuspol der Hilfsspannungsquelle 40a liegt an Masse.

Das in Fig. 2 gezeigte Ausführungsbeispiel hat den Vorteil, daß für die Widerstandsanordnung keine eigene Baugruppe erforderlich ist.

Die in Fig. 3 gezeigte Erkennungsschaltung stimmt mit der Erkennungsschaltung, wie sie in der Schaltungsanordnung nach Fig. 2 enthalten ist, weitgehend überein. Die einzige Abweichung besteht darin, daß anstelle des NAND-Gliedes 34 ein Exklusiv-ODER-Glied 37 vorgesehen ist. Diese Erkennungsschaltung kann die Erkennungsschaltungen 3 bzw. 3a in den Schaltungsanordnungen nach Fig. 1 bzw. Fig. 2 ersetzen. Das Exklusiv-ODER-Glied 37 hat den Vorteil, daß in den Widerstandsanordnungen 4 und 4a eine positive oder negative Hilfsspannung Verwendung finden kann. Die Hilfsspannung muß wie bei den anderen Ausführungsbeispielen in allen Widerstandsanordnungen, die an den Datenbus 6 angeschlossen werden, wenigstens näherungsweise gleich groß sein.

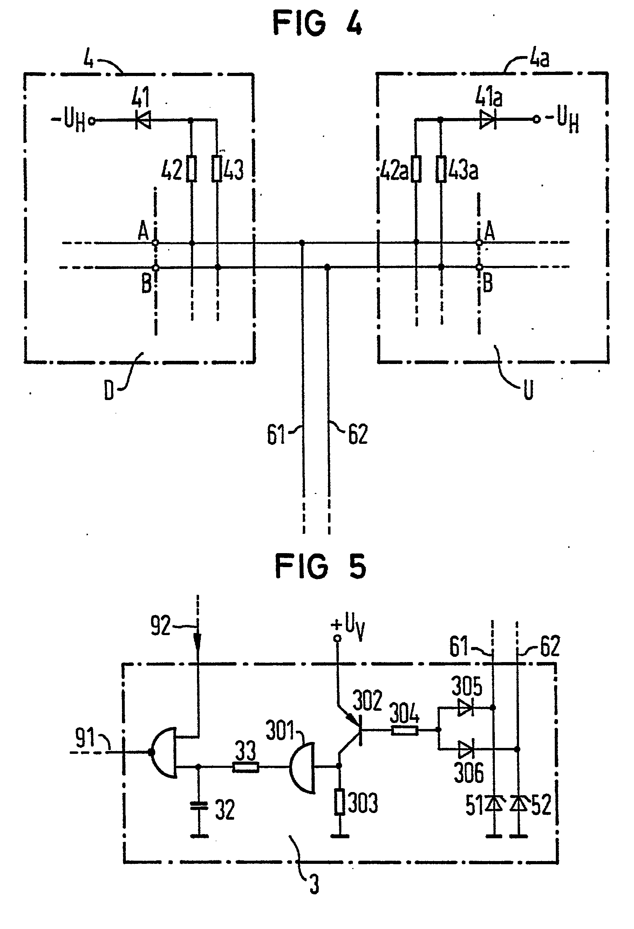

Der in Fig. 4 gezeigte Teil einer Schaltungsanordnung zur seriellen Datenübertragung zeigt den Fall, daß in allen Widerstandsanordnungen 4 und 4a anstelle einer positiven Hilfsspannung eine negative Hilfsspannung $-U_H$ Verwendung findet. Die Dioden 41 und 41a sind daher jeweils so gepolt, daß sie mit ihrer Kathode an der Hilfsspannung $-U_H$ liegen.

Die in Fig. 5 gezeigte Erkennungsschaltung enthält zwei Dioden und einen pnp Transistor. Die Dioden 305 und 306 sind jeweils mit ihrer Kathode an eine Ader 61 bzw. 62 des Datenbusses 6 angeschlossen. Die Anoden der Dioden 305 und 306 sind unmittelbar miteinander verbunden und über den Widerstand 304 an die Basis des Transistors 302 geführt. Der Transistor 302 liegt mit seinem Emitter an der Versorgungsspannung + $U_V$ und ist mit seinem Kollektor sowohl über den Widerstand 303 mit Masse als auch unmittelbar mit dem Eingang des Treiber 301 verbunden. Der Ausgang des Treibers 301 ist über das aus dem Längswiderstand 33 und dem Querkondensator 32 bestehende RC-Glied an einen Eingang des NAND-Gliedes 31 geführt. Das NAND-Glied 31 ist mit dem anderen Eingang an die Steuerleitung 92 angeschlossen. An seinem Ausgang liegt die Steuerleitung 91.

Die Versorgungsspannung $U_V$ beträgt z.B. 5 V. Zwischen den Adern 61 und 62 des Datenbusses 6 und Masse sind jeweils zwei Diodenschwellen und ein Widerstand wirksam, und zwar jeweils die Diodenschwelle der betreffenden Dioden 305 bzw. 306 und die Diodenschwelle der Basis-Emitterstrecke des Transistors 302. Bei belegtem Datenbus hat eine der Adern 61 bzw. 62 näherungsweise Massepotential. Die betreffende Diode 305 bzw. 306 wird leitend und schaltet den Transistor 302 durch, der daher an seinem Kollektor ein Potential annimmt, das einer logischen Eins entspricht. Den gleichen Logikpegel gibt der Ausgang des Treibers 301 ab.

Fügt man zwischen dem Emitter des Transistors 302 und der Versorgungsspannung + $U_V$ eine oder mehrere derart gepolte Dioden ein, daß sie gleichsinnig mit der Basis-Emitterdiode in Serie geschaltet sind, so läßt sich der Ansprechwert der Erkennungsschaltung in einem vergleichsweise großen Bereich wählen.

## Patentansprüche

1. Schaltungsanordnung zur seriellen Datenübertragung zwischen wenigstens zwei Teilnehmerstellen, mit wenigstens zwei Datensendern (22, 22a), die mit ihren Ausgangsanschlüssen (A, B) an ein und denselben, zwei Adern (61, 62) aufweisenden Datenbus (6) angeschlossen sind, jeweils mit einem Steuereingang an eine Steueranordnung angeschlossen und durch die Steueranordnung (1, 23; 7, 23a) derart steuerbar sind, daß immer höchstens einer der Datensender (22, 22a) aktiviert ist, wobei die Datensender im aktivierten Zustand jeweils in Abhängigkeit vom Zustand eines an ihren Eingang angelegten Datensignals eine Spannung erster oder zweiter Polarität an den Datenbus (6) abgeben, wobei die Datensender (22, 22a) im passiven Zustand am Ausgang einen größeren Innenwiderstand haben als im aktiven Zustand und wobei an den Datenbus (6) wenigstens ein Datenempfänger (21, 21a) angeschlossen ist, der nach Art eines Differenzverstärkers an seinem Ausgang bei vorhandener Eingangsspannung abhängig von deren Polarität einen von zwei vorgegebenen Signalzuständen annimmt, dadurch gekennzeichnet, daß der Datenbus (6) an wenigstens einer Stelle mit einer Widerstandsanordnung (4) versehen ist, mit deren Hilfe jede Ader (61, 62) des Datenbusses (6) über einen Widerstand (42, 43, 42a, 43a; 42b, 43b) an eine Spannungsquelle (40) geführt ist, und daß wenigstens einer der Steueranordnungen eine Erkennungsschaltung (3) vorgeschaltet ist, die an ihrem Ausgang bei wenigstens annähernd gleichen Spannungen an den Adern (61, 62) des Datenbusses (6) ein Freisignal mit einem ersten logischen Zustand und bei anderen Spannungen an den Leitungen (61, 62) des Datenbusses (6) ein Belegtsignal mit einem zweiten logischen Zustand an die Steueranordnung (1, 23; 7, 23a) abgibt.

2. Schaltungsanordnung nach Anspruch 1, dadurch gekennzeichnet, daß die Erkennungsschaltung Auswertevorrichtungen zur Auswertung der Spannungen enthält, die die beiden Adern (61, 62) gegen das Bezugspotential führen und daß die Auswertevorrichtungen bei dem durch die Widerstandsanordnung bestimmten Spannungspegel ein Ausgangssignal erster Art und entweder bei der ersten vorgegebenen Spannung oder bei der zweiten vorgegebenen Spannung ein Ausgangssignal zweiter Art bilden und daß die Ausgangssignale der Auswertevorrichtungen in der Erkennungsschaltung derart verknüpft sind, daß bei wenigstens einem Ausgangssignal zweiter Art das Belegtsignal gebildet wird.

3. Schaltungsanordnung nach Anspruch 2, dadurch gekennzeichnet, daß die Spannung der Spannungsquelle (40), an die die Widerstände (42, 43) der Widerstandsanordnung (4) geführt sind, größer als die größere der beiden vorgegebenen Spannungen ist und daß der Steuersignalempfänger jeweils ein an den Datenbus (6) angeschlossenes logisches Verknüpfungsglied (34, 34a) einer Schaltkreisfamilie gebildet ist, bei der der kleineren der beiden vorgegebenen Spannungen der eine logische Zustand und der größeren der beiden Spannungen der andere logische Zustand entspricht.

4. Schaltungsanordnung nach einem der Ansprüche 1 bis 3, dadurch gekennzeichnet, daß mehrere Widerstandsanordnungen (4, 4a) vorgesehen sind, und daß in den Widerstandsanordnungen (4, 4a) jeweils die Widerstände über eine die Spannung ($U_H$) der Spannungsquelle leitende Diode (41, 41a) an die Spannungsquelle (40) geführt sind.

5. Schaltungsanordnung nach einem der Ansprüche 1 bis 4, dadurch gekennzeichnet, daß einem Steuereingang der dem zugeordneten Datensender (22, 22a) vorgeschalteten Teilnehmerstelle jeweils ein UND-Glied vorgeschaltet ist, das mit einem ersten Eingang an die Erkennungsschaltung angeschlossen ist und dessen zweiter Eingang zusammen mit dem betreffenden Datensender (22, 22a) durch die Teilnehmerstelle derart steuerbar ist, daß das UND-Glied nur bei passiv gesteuertem Datensender (22, 22a) vorbereitet ist.

6. Schaltungsanordnung nach Anspruch 5, dadurch gekennzeichnet, daß der Ausgang des Verknüpfungsgliedes (34, 34a) über ein RC-Glied (33, 32) an einen Schmitt-Trigger (31) geführt ist.

7. Schaltungsanordnung nach Anspruch 5 und 6, dadurch gekennzeichnet, daß der Schmitt-Trigger als UND-Glied ausgebildet ist.

8. Schaltungsanordnung nach einem der Ansprüche 2 bis 7, dadurch gekennzeichnet, daß das logische Verknüpfungsglied (34, 34a) ein NAND-Glied ist.

9. Schaltungsanordnung nach einem der Ansprüche 2 bis 7, dadurch gekennzeichnet, daß das logische Verknüpfungsglied (34, 34a) ein Exklusiv-ODER-Glied ist.

10. Schaltungsanodnung nach einem der Ansprüche 2 bis 7, dadurch gekennzeichnet, daß das logische Verknüpfungsglied einen Transistor (302) enthält, dessen Basis über je eine Diode (305, 306) an die Adern (61, 62) des Datenbusses (6) geführt ist.

## Claims

1. Circuit arrangement for serial data transmission between at least two subscriber stations, with at least two data transmitters,(22, 22a), which are connected with their output terminals (A, B) to one and the same data bus (6), which has two wires (61, 62), are connected in each case with one control input to a control arrangement and can be controlled by the control arrangement (1, 23; 7, 23a) in such a way that, at most, one of the data transmitters (22, 22a) is activated at any time, in the activated state the data transmitters in each case outputting a voltage of first or second polarity to the data bus (6) depending on the state of a data signal applied to their input, in the passive state the data transmitters (22, 22a) having at the output higher internal resistance than in the active state, and at least one data receiver (21, 21a) being connected to the data bus (6), which data receiver assumes, in the manner of a differential amplifier, one of two prescribed signal states at its output given an existing input voltage and depending on its polarity, characterized in that the data bus (6) is provided at at least one location with a resistor arrangement (4) with the aid of which each wire (61, 62) of the data bus (6) is connected to a voltage source (40) via a resistor (42, 43, 42a, 43a; 42b, 43b), and in that at least one of the control arrangements is preceded by a recognition circuit (3) which, given at least approximately equal voltages at the wires (61, 62) of the data bus (6), outputs at its output a free signal having a first logic state, and given different voltages at the lines (61, 62) of the data bus (6), outputs at its output a busy signal having a second logic state to the control arrangement (1, 23; 7, 23a).

2. Circuit arrangement according to claim 1, characterized in that the recognition circuit contains evaluation devices for evaluating the voltages carried by the two wires (61, 62) relative to the reference potential, and in that, given the voltage level defined by the resistor arrangement, the evaluation devices form an output signal of a first type and, given either the first prescribed voltage or given the second prescribed voltage, form an output signal of a second type, and in that the output signal of the evaluation devices are gated in the recognition circuit in such a way that the busy signal is formed given at least one output signal of the second type.

3. Circuit arrangement according to claim 2, characterized in that the voltage of the voltage source (40) to which the resistors (42, 43) of the resistor arrangement (4) are connected is higher than the higher of the two prescribed voltages, and in that the control signal receiver is formed by a logic gating element (34, 34a) which is connected in each case to the data bus (6) and belongs to a circuit family in which the lower of the two prescribed voltages corresponds to one logic state and the higher of the two voltages corresponds to the other logic state.

4. Circuit arrangement according to one of claims 1 to 3, characterized in that a plurality of resistor arrangements (4, 4a) is provided, and in that in the resistor arrangements (4, 4a) the resistors are connected in each case to the voltage source (40) via a diode (41, 41a) which conducts the voltage ($U_H$) of the voltage source

5. Circuit arrangement according to one of claims 1 to 4, characterized in that a control input of the subscriber station preceding the associated data transmitter (22, 22a) is in each case preceded by an AND gate which is connected with a first input to the recognition circuit, and the second input of which, together with the respective data transmitter (22, 22a), can be controlled by the subscriber station in such a way that the AND gate is enabled only given a passively-driven data transmitter (22, 22a).

6. Circuit arrangement according to claim 5, characterized in that the output of the gating element (34, 34a) is connected to a Schmitt trigger (31) via an RC element (33).

7. Circuit arrangement according to claims 5 and 6, characterized in that the Schmitt trigger is designed as an AND gate.

8. Circuit arrangement according to one of claims 2 to 7, characterized in that the logic gating element (34, 34a) is a NAND gate.

9. Circuit arrangement according to one of claims 2 to 7, characterized in that the logic gating element (34, 34a) is an exclusive OR gate.

10. Circuit arrangement according to one of claims 2 to 7, characterized in that the logic gating element contains a transistor (302), the base of which is connected to the wires (61, 62) of the data bus (6) via a diode (305, 306) in each case.

## Revendications

1. Montage pour la transmission sérielle de données entre au moins deux abonnés, avec au moins deux émetteurs de données (22, 22a), qui par leurs bornes de sortie (A, B) sont reliés à un seul et même bus de données qui comporte deux fils (61, 62), et qui sont chacun reliés à l'aide d'une entrée de commande à un dispositif de commande (1, 23; 7, 23a) en étant susceptibles d'être commandés de telle façon qu'au plus l'un des émetteurs (22, 22a) est toujours activé, les émetteurs de données, à l'état activé, émettant chacun en fonction de l'état du signal de données appliqué à son entrée, au bus de données (6) une tension d'une première ou d'une seconde polarité, alors que les émetteurs de données (22, 22a), à l'état passif, présentant à la sortie, une résistance intérieure plus grande qu'à l'état actif, et qu'au bus de données (6) est relié au moins un récepteur de données (21, 21a) qui, à la manière d'un amplificateur différentiel, assume à sa sortie, en présence d'une tension d'entrée et en fonction de sa polarité, un parmi deux états de signaux prédéterminés, caractérisé par le fait que le bus de données (6) est pourvu, au moins en un emplacement, d'un agencement à résistances (4) à l'aide duquel chaque fil (61, 62) du bus de données est relié, par l'intermédiaire d'une résistance (42, 43, 42a, 43a; 42b, 43b), à une source de tension (40), et qu'en amont de l'un des dispositifs de commande, est prévu un circuit d'identification (3) qui émet, dans le cas de tensions sensiblement identiques des fils (61, 62) du bus de données, un signal de libération d'un premier état logique émet, dans le cas d'autres tensions des conducteurs (61, 62) de bus de données, pour le dispositif de commande (1, 23, 7, 23a), un signal d'occupation d'un second état logique.

2. Montage selon la revendication 1, caractérisé par le fait que le circuit d'identification comporte des dispositifs d'évaluation pour évaluer les tensions auxquelles sont portées les deux fils (61, 62) par rapport au potentiel de référence, et que les dispositifs d'évaluation forment, dans le cas du niveau de tension déterminé par le dispositif à résistances, un signal de sortie du premier genre et un signal de sortie du second genre, soit dans le cas de la première tension prédéterminée soit dans le cas de la seconde tension prédéterminée, et que les signaux de sortie des dispositifs d'évaluation sont combinés dans le circuit d'identification de telle façon que le signal d'occupation soit formé dans le cas de la présence d'un signal de sortie d'au moins du second genre.

3. Montage selon la revendication 2, caractérisé par le fait que la tension de la source de tension (40) à laquelle sont portées les résistances (42, 43) du dispositif à résistances (4), est supérieure à la plus grande des deux tensions prédéterminées, et que le récepteur des signaux de commande est formé par un circuit logique (34, 34a) d'une famille de circuits de commutation, dans laquelle la plus petite des deux tensions prédéterminée correspond à l'un des deux états logiques, et qu'à la plus grande des deux tensions correspond l'autre état logique.

4. Montage selon l'une des revendications 1 à 3, caractérisé par le fait que plusieurs dispositifs à résistances (4, 4a) sont prévus, et que, dans les dispositifs à résistances (4, 4a) chacune des résistances est reliée à la source de tension (40) par l'intermédiaire pour une diode (41, 41a) portée à la tension ($U_M$) de la source de tension.

5. Montage selon l'une des revendications 1 à 4, caractérisé par le fait qu'en amont d'une entrée de commande du poste d'abonné monté en amont de l'émetteur de données associé (22, 22a), est prévu un circuit ET qui est relié par une première entrée au circuit d'identification et dont la seconde entrée est susceptible d'être commandé, en même temps que l'émetteur commun de données (22, 22a), de telle façon par le poste d'abonné que le circuit ET n'est préparé que dans le cas de l'émetteur de données (22, 22a) commandé dans son état passif.

6. Montage selon la revendication 5, caractérisé par le fait que la sortie de circuit logique (34, 34a) est relié par l'intermédiaire d'un circuit RC à une bascule de Schmitt.

7. Montage selon les revendications 5 et 6, caractérisé par le fait que la bascule de Schmitt est réalisée sous la forme d'un circuit ET.

8. Montage selon l'une des revendications 2 à 7, caractérisé par le fait que le circuit logique (34, 34a) est un circuit NON-ET.

9. Montage selon l'une des revendications 2 à 7, caractérisé par le fait que le circuit logique (34, 34a) est un circuit NON-EXCLUSIF.

10. Montage selon l'une des revendications 2 à 7, caractérisé par le fait que le circuit logique comporte un transistor (302) dont la base est reliée par respectivement une diode (305, 306) aux fils (61, 62) du bus de données (6).

EP 0 235 648 B1

FIG 1

# FIG 2

# FIG 3

# FIG 4

# FIG 5